# EUROPEAN PATENT APPLICATION

(11) **EP 2 343 616 A1**
(43) Date of publication of application: **13.07.2011**
(21) Application number: 09815833.0
(22) Date of filing: 04.09.2009
(51) Int. Cl.: G05D 1/02

(54) **GUIDED VEHICLE SYSTEM**

(30) Priority: 26.09.2008 JP 2008249020
(71) Applicant: Murata Machinery, Ltd., Kyoto-shi, Kyoto 6018326 (JP)
(72) Inventor: HARASAKI, Kazumi, Inuyama-shi Aichi 484-8502 (JP)
(74) Representative: Zimmermann, Tankred Klaus
(86) International application number: PCT/JP2009/004368
(87) International publication number: WO 2010/035411

(57) **Abstract**

The object of the invention is to provide a guided vehicle system that achieves a higher conveyance efficiency by manipulating an exclusion control executed with respect to a junction section. The guided vehicle system 1 comprises a traveling path, a plurality of guided vehicles 3, and a guided vehicle controller 27. The traveling path includes a linear section 45, an exit-side connecting path 39, and a second junction section 41 where the linear section 45 and the exit-side connecting path 39 converge. The guided vehicles 3 travel along the traveling path. The exit-side connecting path 39 has a standby section. The guided vehicle controller 27 controls the movement of the guided vehicles 3. During a period until a prescribed number of guided vehicles 3 has stopped in the standby section of the exit-side connecting path 39, the guided vehicle controller 27 allows guided vehicles 3 to pass from the linear section 45 to the second junction section 41 continuously while making guided vehicles 3 wait at the standby section of the exit-side connecting path 39.

## Description

### TECHNICAL FIELD

The present invention relates to a guided vehicle system, particularly a guided vehicle system in which a plurality of guided vehicles travel on a path having a junction section where two paths merge.

### BACKGROUND ART

A conventional guided vehicle system has a circuitous course, a plurality of stations provided along the path of the circuitous course, and a plurality of guided vehicles contrived to travel along the circuitous course in one direction and convey articles. The guided vehicle system is contrived to execute an exclusion control in order to prevent collisions at intersections where tracks diverge or converge (e.g., see Patent Document 1).

The exclusion control will now be explained. A prescribed region upstream of an intersection is treated as a special area and a guided vehicle that has entered the special area sends an intersection blocking request to a system controller. The guided vehicle then enters the intersection if it receives permission to block the intersection or waits in front of the intersection if it does not receive permission to block the intersection. When the guided vehicle has passed through the intersection, the guided vehicle sends a blocking cancellation request to the system controller. This enables a next guided vehicle to travel through the intersection. The guided vehicle also has a sensor contrived to detect an obstacle. If a preceding guided vehicle has stopped, the obstacle sensor will detect the preceding vehicle and the guided vehicle will stop to avoid a collision.

### CITATION LIST

### PATENT LITERATURE

- PATENT LITERATURE 1: Japanese Laid-open Patent Publication No. 2002-351543

### SUMMARY OF INVENTION

### TECHNICAL PROBLEM

In the conventional guided vehicle system, the exclusion control is contrived such that when a plurality of guided vehicles travel to a junction section from two paths, the guided vehicles pass through the junction section alternately from the paths. Consequently, the guided vehicles repeatedly make temporary stops on their respective paths. Since a delay time occurs between each temporary stop and each restart, an overall conveying efficiency of the system declines.

An object of the present invention is to provide a guided vehicle system that can achieve a higher conveying efficiency by improving an exclusion control executed at a junction point.

### SOLUTION TO PROBLEM

A guided vehicle system according to one aspect of the present invention comprises a traveling path, a plurality of guided vehicles, and a controller. The traveling path comprises a first path, a second path, and a junction section where the first path and the second path merge. The guided vehicles travel along the traveling path. The second path has a standby section. The controller controls the movement of the guided vehicles. During a period of time before a prescribed number of the guided vehicles have stopped in the standby section of the second path, the controller allows guided vehicles on the first path to pass to the junction section continuously while making the aforementioned guided vehicles wait at the standby section of the second path.
With this system, the guided vehicles on the first path pass to the junction section continuously. The continuous passing of guided vehicles on the first path is stopped when a prescribed number of guided vehicles have waited in the standby section of the second path.
Since the guided vehicles pass through continuously, the conveying efficiency of the system as a whole is improved. When a number of guided vehicles waiting at the standby section of the second path reaches a prescribed number, the guided vehicles on the second path are allowed to pass through the junction section. Thus, guided vehicles do not easily become stagnated at an upstream side (upstream in terms of a conveyance direction of the guided vehicles) of the second path.

It is preferable to contrive the system such that the controller allows a plurality of guided vehicles on the second path to pass through the junction section continuously when the prescribed number of the guided vehicles have stopped in the standby section of the second path.
With such a system, the conveying efficiency of the system as a whole is improved because a plurality of guided vehicles waiting at the standby section of the second path are allowed to pass through the junction section continuously.

It is preferable to configure the system such that the first path has a standby section and the controller makes the guided vehicles wait at the standby section of the first path until a prescribed condition is satisfied while the guided vehicles on the second path are passing through the junction section.
With such a system, the guided vehicles do not easily become stagnated at a upstream side (in terms of the conveyance direction of the guided vehicles) of the first path because the guided vehicles in the standby section of the first path can pass through the junction section when the prescribed condition is satisfied.

It is preferable to contrive the system such that the controller allows a guided vehicle waiting at the second path to pass through the junction section regardless of the number of the waiting guided vehicles when the guided vehicles has been waiting for at least a prescribed amount of time.
In such a system, the guided vehicles waiting at the standby section of the second path are allowed to pass through the junction section when a prescribed amount of time has elapsed even if the number of waiting guided vehicles has not reached a prescribed number. As a result, the guided vehicles can be prevented from waiting for a long period of time in the standby section of the second path.

A guided vehicle system according to another aspect of the present invention comprises a traveling path, a plurality of guided vehicles, and a controller. The traveling path comprises a first route, a second route, and a junction section where the first route and the second route merge. The guided vehicles travel along the traveling path. The controller controls the movement of the guided vehicles. The controller can switch between a first mode in which the controller only allows guided vehicles in the first route to travel through the junction section and a second mode in which the controller only allows guided vehicles in the second route to travel through the junction section. In at least one of the modes, the controller switches modes when a number of guided vehicles stopped in the route from which traveling to the junction section is not permitted reaches a prescribed number.
In this guided vehicle system, the guided vehicles in the first route pass continuously through the junction section while the controller is in the first mode and the guided vehicles in the second route pass continuously through the junction section while the controller is in the second mode. In at least one of the modes, the controller switches modes when the number of guided vehicles stopped in the route from which traveling to the junction section is not permitted reaches a prescribed number.
Since the guided vehicles pass through continuously, the conveying efficiency of the system as a whole is improved. Also, since the mode switches when the number of guided vehicles stopped in the route from which traveling through the junction section is not permitted reaches a prescribed number, the guided vehicles do not easily become stagnated in the route from which traveling is not permitted.

It is preferable to contrive the system such that the controller switches modes when the number of guided vehicles that have passed through the junction section in the route from which traveling to the junction section is permitted reaches the prescribed number even if the number of guided vehicles stopped in the route from which traveling to the junction section is not permitted has not reached a predetermined number.
With such a guided vehicle system, the guided vehicles do not easily become stagnated in the route from which traveling to the junction section is not permitted.

It is preferable to contrive the system such that the controller switches modes when a prescribed amount of time has elapsed since a currently selected mode was selected, even if the number of guided vehicles stopped in the route from which traveling to the junction is not permitted has not reached the prescribed number.
With such a guided vehicle system, guided vehicles do not easily become stagnated in the route from which traveling to the junction section is not permitted.

It is preferable to contrive the system such that the controller gives priority to selecting a mode in which the guided vehicles can only travel along whichever one of the first route and the second route that is linear on both the upstream and the downstream of the junction section.
With such a guided vehicle system, the conveying efficiency of the system as a whole is improved because the route that is linear where the guided vehicle passes through the junction point is given priority.

It is preferable to configure the system such that at least one of the first route and the second route has a standby section where the guided vehicles can wait.
With such a guided vehicle system, the guided vehicles wait at the standby section of the route from which traveling to the junction section is not permitted.

It is preferable to configure the system such that a plurality of guided vehicles can wait at the standby section.
With such a guided vehicle system, the guided vehicles can travel for a longer period of time along the route from which traveling to the junction section is permitted because a plurality of guided vehicles can wait at the standby section. As a result, the conveying efficiency of the system as a whole is improved.

The first route and the second route span from the junction section to an immediate branch section located upstream in the conveyance direction, and the prescribed number of guided vehicles stopped along the route from which traveling to the junction section is not permitted is a maximum number of guided vehicles that can be stopped in the route from which traveling to the junction section is not permitted without impeding other guided vehicles traveling along a different route at the immediate branch section.
With such a guided vehicle system, the guided vehicles stopped along the route from which traveling to the junction section is not permitted will not impede the movement of other guided vehicles traveling along a different route at the first branch section. As a result, the conveying efficiency of the system as a whole is improved.

### ADVANTAGEOUS EFFECTS OF INVENTION

With a guided vehicle system according to the present invention, a high conveying efficiency can be achieved by improving an exclusion control executed with respect to a junction point.

### BRIEF DESCRIPTION OF DRAWINGS

Fig. 1 is a partial plan view showing a layout of a guided vehicle system according to an embodiment of the present invention.
Fig. 2 is a block diagram showing a control scheme of a guided vehicle system.
Fig. 3 is a flowchart showing control operations for controlling a timing at which a priority mode is switched with respect to junction sections.
Fig. 4 is a simplified sketch for explaining a state of a guided vehicle at a second junction section during a main path priority mode.
Fig. 5 is a simplified sketch for explaining a state of a guided vehicle at a second junction section during a subordinate path priority mode.
Fig. 6 is a simplified sketch for explaining a state of a guided vehicle at a first junction section during a main path priority mode.
Fig. 7 is a simplified sketch for explaining a state of a guided vehicle at a first junction section during a subordinate path priority mode.

### DESCRIPTION OF EMBODIMENTS

### 1. Layout of Guided Vehicle System

A guided vehicle system 1 according to an embodiment of the present invention is a system that allows a plurality of guided vehicles 3 to travel along a set course. The guided vehicles 3 travel along the course in one direction and operate in accordance with conveyance commands issued from a higher level controller (explained later) such that they receive articles from a target location, travel to a conveyance destination, and unload the articles at the conveyance destination. Any type of guided vehicle is acceptable, e.g., an overhead guided vehicle, an automated guided vehicle that does not travel along a set course, or a carriage that does travel along a set course.

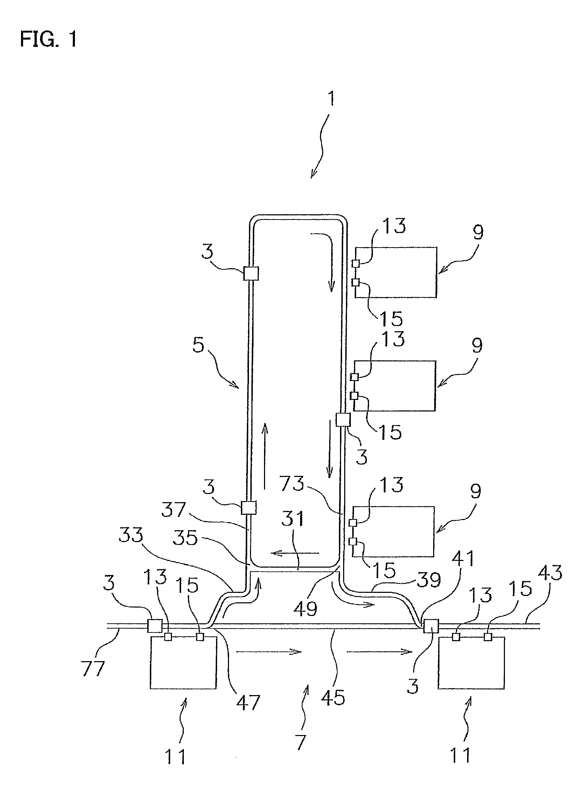

Figure 1 shows a layout of a guided vehicle system 1. The guided vehicle system 1 has a plurality of circuitous traveling paths 5 and a principal traveling path 7 that joins the circuitous traveling paths 5. The entire principal traveling path 7 constitutes one circuitous traveling path. A plurality of processing devices 9 are provided along the circuitous traveling paths 5 and a plurality of stockers 11 are provided along the principal traveling path 7. The stockers 11 function as buffers between groups of processing devices 9 of the circuitous traveling paths 5.

Each of the processing devices 9 and stockers 11 (equipment) has a receiving port 13 for carrying an article into the equipment and a discharge port 15 from which an article is picked and placed onto a guided vehicle 3. It is also acceptable for a same port to serve as both the receiving port 13 and the discharge port 15.

### 2. Layout of Junction Section

The structure of an intersection point, i.e., a junction section or a branch section, in the guided vehicle system will now be explained using Fig. 1.

A connecting path 31 is provided on a principal traveling path 7 side of each circuitous traveling path 5 to complete the circuitous shape. In this embodiment, the connecting path 31 is arranged to connect two linear sections of the circuitous traveling path 5 that are substantially parallel to each other.

The principal traveling path 7 is connected to each of the circuitous traveling paths 5 with an entrance-side connecting path 33 and an exit-side connecting path 39.

The entrance-side connecting path 33 is a path that enables a guided vehicle 3 to enter a circuitous traveling path 5 from the principal traveling path 7. Each entrance-side connecting path 33 extends from a position along a linear section 45 of the principal traveling path 7 and connects to a terminal end section of the connecting path 31 of the circuitous traveling path 5. The entrance-side connecting path 33 is curved but also has a linear section. In this way, a first junction section 35 is formed where the connecting path 31 and the entrance-side connecting path 33 merge and from where a linear section 37 extends.

The exit-side connecting path 39 is a path that enables a guided vehicle 3 to exit a circuitous traveling path 5 and enter the principal traveling path 7. Each exit-side connecting path 39 extends from a starting end of the connecting path 31 of the circuitous traveling path 5 and connects to a position along the linear section 45 of the principal traveling path 7. The exit-side connecting path 39 is curved but also has a linear section. In this way, a second junction section 41 is formed where the linear section 45 of the principal traveling path 7 and the exit-side connecting path 39 merge and from where a linear section 43 extends.

The principal traveling path 7 also includes a first branch section 47 where the entrance-side connecting path 33 and the linear section 45 diverge from each other. The circuitous traveling path 5 includes a second branch section 49 where the connecting path 31 and the exit-side connecting path 39 diverge.

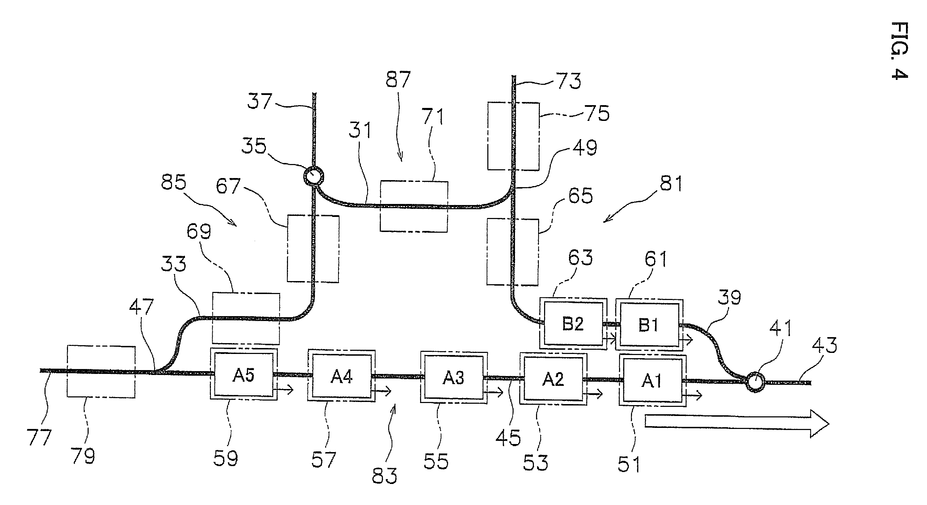

As shown in Fig. 4, three stop positions 61, 63, and 65 (in the order of positions, from the downstream in conveyance direction towards the upstream) are provided along the exit-side connecting path 39 between the second junction section 41 and the second branch section 49 and constitute a standby section 81 of the exit-side connecting path 39. Five stop positions 51, 53, 55, 57, and 59 (in the order of positions, from the downstream in conveyance direction towards the upstream) are provided along the linear section 45 of the principal traveling path 7 between the second junction section 41 and the first branch section 47 and constitute a standby section 83 of the linear section 45. Two stop positions 67 and 69 are provided along the entrance-side connecting path 33 between the first junction section 35 and the first branch section 47 (in the order of positions, from the downstream in conveyance direction towards the upstream) and constitute a standby section 85 of the entrance-side connecting path 33. One stop position 71 is provided along the connecting path 31 between the first junction section 35 and the second branch section 49 and constitutes a standby section 87 of the connecting path 31. In Fig. 4, a stop position 75 is provided along a linear section 73 at a position upstream of the second branch section 49 in terms of the conveyance direction and it is acceptable for the stop position 75 to be included as a portion of the standby section 81 or 87. A stop position 79 is provided along a linear section 77 at a position upstream of the first branch section 47 in terms of the conveyance direction and it is acceptable for the stop position 79 to be included as a portion of the standby section 83 or 85.

To summarize the preceding explanations, the first branch section 47 is positioned upstream (in terms of the conveyance direction) of the linear section 45, the second branch section 49 is positioned upstream of the exit-side connecting path 39, the linear section 45 and the exit-side connecting path 39 converge at the second junction section 41, and at least one stop position is provided along each of the linear section 45 and the exit-side connecting path 39. Also, the first branch section 47 is positioned upstream (in terms of the conveyance direction) of the entrance-side connecting path 33, the second branch section 49 is positioned upstream of the connecting section 31, the entrance-side connecting path 33 and the connecting section 31 converge at the first junction section 35, and at least one stop position is provided along each of the entrance-side connecting path 33 and the connecting section 31.

### 3. Control Scheme of Guided Vehicle System

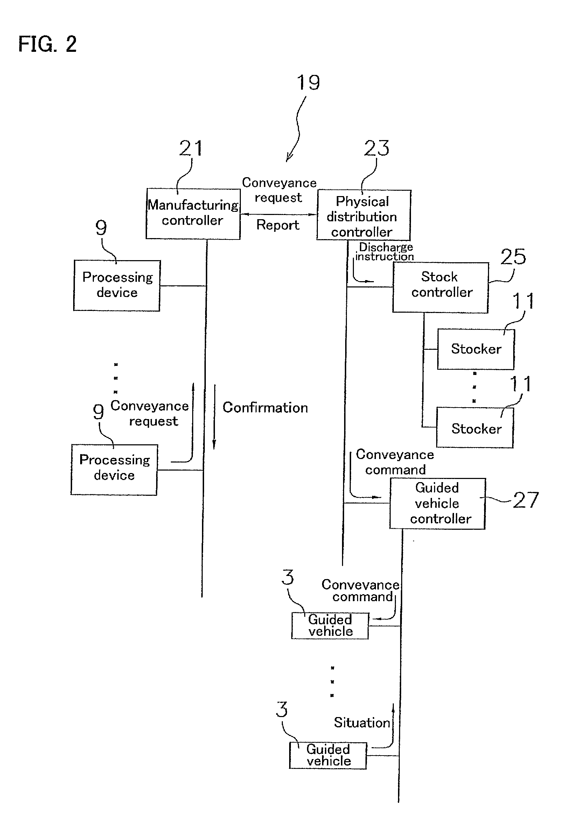

Figure 2 shows a control scheme 19 of the guided vehicle system 1. The control scheme 19 has a manufacturing controller 21, a physical distribution controller 23, a stocker controller 25, and a guided vehicle controller 27. The physical distribution controller 23 is a higher level controller over the stocker controller 25 and the guided vehicle controller 27. The guided vehicle controller 27 manages the guided vehicles 3 and has an allocation function serving to allocate conveyance commands to the guided vehicles 3.

The manufacturing controller 21 can communicate with the processing devices 9. The processing devices 9 send article conveyance requests (pick requests and place requests) to the manufacturing controller 21 regarding articles for which processing has been finished.

The manufacturing controller 21 sends the conveyance requests from the processing devices 9 to the physical distribution controller 23 and the physical distribution controller 23 sends a report to the manufacturing controller 21.

When it receives a conveyance request from the manufacturing controller 21, the physical distribution controller 23 sends a receive command or a discharge command to the stocker controller 25 at a prescribed timing if the conveyance request involves receiving or discharging an article at a stocker 11. In response, the stocker controller 25 sends the receive command or discharge command to the stocker 11. When it receives the conveyance request from the manufacturing controller 21, the physical distribution controller 23 also converts the conveyance request into a conveyance command and executes an allocation operation to allocate the conveyance command to a guided vehicle 3.

In order to create conveyance commands, the guided vehicle controller 27 communicates continuously with each of the guided vehicles 3 and obtains position information regarding each of the guided vehicles 3 based on position data transmitted from the guided vehicles 3. Two examples of acquiring position information will now be presented.
- A plurality of points are set in the circuitous traveling path 5 and a guided vehicle 3 sends a passage signal to the guided vehicle controller 27 each time it passes through one of the points. The guided vehicle controller 27 stores the point which the guided vehicle 3 last passed and the time at which it passed through the point. It then computes a position of the guided vehicle 3 based on specified speed and time in that particular point sector.
- An encoder, for example, is provided on a guided vehicle 3 and the distance traveled since the guided vehicle 3 passed through a point is transmitted to the guided vehicle controller 27 as position data. The guided vehicle controller 27 recognizes the position of the guided vehicle 3 based on the position data.

Each of the guided vehicles 3 has a controller (not shown) that includes a control section and a memory. The controller of each guided vehicle 3 is a computer comprising a CPU, a RAM, and a ROM and is contrived to execute programs. The controller of a guided vehicle 3 can exchange signals with the guided vehicle controller 27. The guided vehicle 3 has a route map stored in its memory and travels while comparing coordinates indicated in the route map with its own internal coordinates (coordinates found using the encoder).
When a guided vehicle 3 enters a prescribed area in front of a junction section, the guided vehicle 3 sends a blocking request to the guided vehicle controller 27. If the guided vehicle controller 27 has not received a blocking request from another guided vehicle 3 or if a blocking request received from another guided vehicle 3 has a lower priority, the guided vehicle controller 27 sends a blocking command (command giving permission to block) to the aforementioned guided vehicle 3. The guided vehicle 3 can pass through the junction section if it has received the blocking command, and the guided vehicle 3 is stopped in front of the junction section if it has not received the blocking command. Additionally, each time the guided vehicle 3 passes through an junction point, it sends a blocking cancellation request to the guided vehicle controller 27. As a result, the guided vehicle controller 27 determines if it will wait for a blocking request from another guided vehicle 3 or if it will respond to a blocking request already received from another guided vehicle 3.

### 4. Blocking Control for Junction Sections

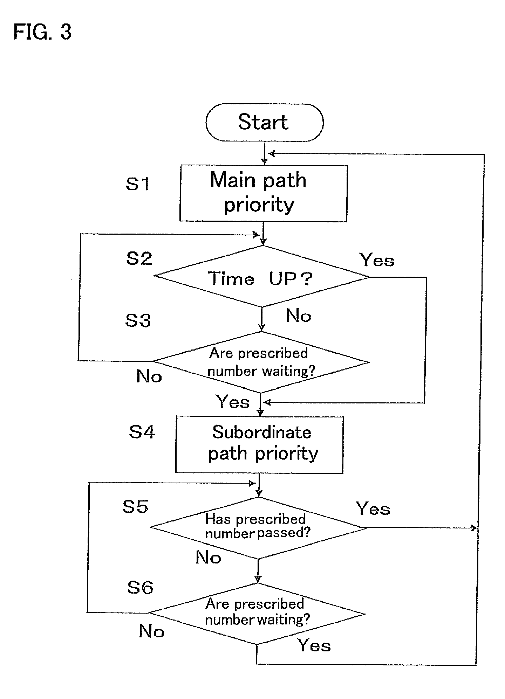

A blocking control executed at a junction section will now be explained with reference to the flowchart shown in Figure 3.

### (1) Second Junction Section 41

First, a blocking control executed with respect to the second junction section 41 will be explained.

In step S 1 of Figure 3, a main path priority mode is adopted. In the case of the second junction section 41, the "main path" is the linear section 45 connected in a linear fashion to the linear section 43, the linear section 43 being located downstream in the conveyance direction from the second junction section 41. The exit-side connecting path 39 is a "subordinate path." In the main path priority mode, the guided vehicle controller 27 grants permission to blocking requests received from guided vehicles 3 traveling along the linear section 45 and does not grant permission to blocking requests received from guided vehicles 3 traveling along the exit-side connecting path 39. More specifically, a guided vehicle 3 traveling along the linear section 45 sends a blocking request to the guided vehicle controller 27 when it enters the prescribed area as it approaches the second junction section 41. The guided vehicle controller 27 then sends a blocking command to the guided vehicle 3 and permits the guided vehicle 3 to pass through the second junction section 41. After passing through the junction, the guided vehicle 3 sends a blocking cancellation request to the guided vehicle controller 27. As a result, the guided vehicle controller 27 cancels the blocking permission. Through repeated execution of the operations explained above, a plurality of guided vehicles 3 pass through the second junction section 41 consecutively. In this way, since a plurality of guided vehicles 3 pass through the second junction section 41 without stopping temporarily in front of the second junction section 41, the guided vehicles 3 of the guided vehicle system 1 can achieve a larger amount of travel. In particular, since the guided vehicles 3 traveling at a high speed along the linear section pass through the second junction section 41 in succession, the aforementioned effect is exhibited even more.

Meanwhile, in the main path priority mode, when a guided vehicle 3 traveling along the exit-side connecting path 39 approaches the second junction section 41 and enters the prescribed area, the guided vehicle controller 27 does not send a blocking command to the guided vehicle 3 in response to a blocking request the guided vehicle 3 sends to the guided vehicle controller 27. Thus, the guided vehicle 3 stops at the stop position 61 in front of the second junction section 41.
In Fig. 4, five guided vehicles A1, A2, A3, A4, and A5 traveling along the linear section 45 are about to pass through the second junction section 41 in succession while two guided vehicles B1 and B2 are waiting at the stop positions 61 and 63 along the exit-side connecting path 39. The second guided vehicle B2 stops itself at the stop position 63 in order to avoid colliding with the first guided vehicle B1 (the same applies for other guided vehicles mentioned below).

In step S2, the control proceeds to step S3 if a prescribed amount of time has not elapsed. If the prescribed amount of time has elapsed, the control skips step S3 and proceeds to step S4. The prescribed amount of time is measured by a timer of the guided vehicle controller 27, which starts at the time when a first waiting guided vehicle 3 (the guided vehicle B1 in Fig. 4) sends a blocking request.

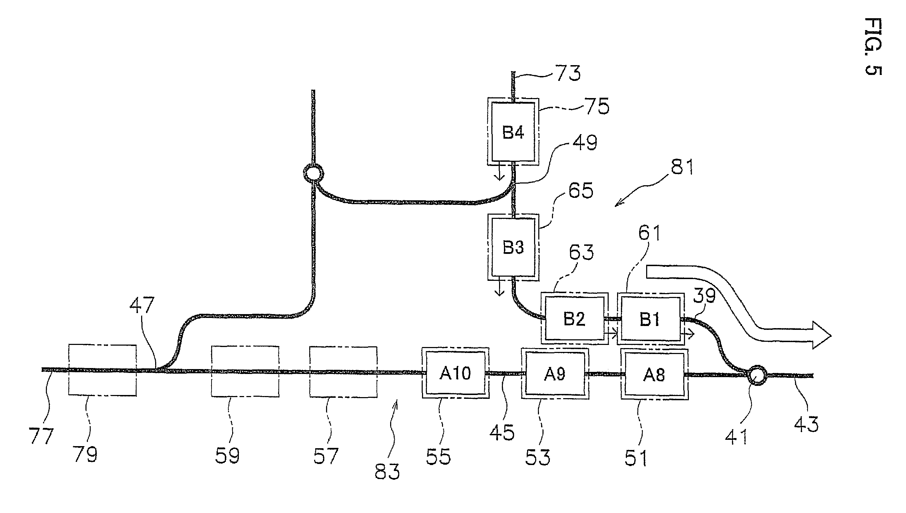

In step S3, the control waits until three guided vehicles 3 have stopped on the exit-side connecting path 39 and a guided vehicle 3 traveling toward the exit-side connecting path 39 has stopped at the stop position 75 located upstream in terms of the conveyance direction from the second branch section 49. If the number of waiting guided vehicles 3 has not reached the aforementioned prescribed number, the control returns to step S2. If the prescribed number of guided vehicles 3 are waiting, the control proceeds to step S4. Fig. 5 illustrates a situation in which guided vehicles B1, B2, and B3 have stopped at the stop positions 61, 63, and 65 of the exit-side connection path 39 and a fourth guided vehicle B4 has stopped at the stop position 75 located upstream of the second branch section 49. The guided vehicle controller 27 stores, in advance, a number indicating how many guided vehicles 3 can be stopped along the exit-side connecting path 39 seen from the second junction section 41 (i.e., the number of guided vehicles that can wait at the standby section). In order to achieve that number, the guided vehicle controller 27 determines if a prescribed number of guided vehicles 3 are waiting, by using a maximum allowable stop distance from the second junction section 41 (a distance serving as the reference for switching the priority mode when a guided vehicle 3 stops at a position farther away from the second junction section 41 than the maximum allowable stop distance). Other determinations regarding the number of guided vehicles waiting at a standby area are handled in the same manner.

In step S4, the mode is switched from the main path priority mode to the subordinate path priority mode. In the subordinate path priority mode, the guided vehicle controller 27 grants permission to blocking requests received from guided vehicles 3 traveling along the exit-side connecting path 39 and does not grant permission to blocking requests received from guided vehicles 3 traveling along the linear section 45. Thus, when a guided vehicle 3 traveling along the linear section 45 approaches the second junction section 41 and enters the prescribed area, the guided vehicle controller 27 does not send a blocking command to the guided vehicle 3 in response to a blocking request the guided vehicle 3 sends to the guided vehicle controller 27. As a result, the guided vehicle 3 stops at the stop position 51. The operation just explained is repeated and guided vehicles 3 stop sequentially along the linear section 45. Fig. 5 shows a situation in which three guided vehicles A8, A9, and A10 have stopped along the linear section 45. Meanwhile, the guided vehicles B1, B2, B3, and B4, which had been waiting, receive blocking permission from the guided vehicle controller 27 in sequential order and then send blocking cancellation requests to the guided vehicle controller 27 after they pass through the second junction section 41. As a result, the previously waiting guided vehicles B1, B2, B3, and B4 pass through the second junction section 41 successively.

In step S5, if a portion or all of the guided vehicles (guided vehicles B 1 to B4), which had been waiting along the subordinate path when the priority mode changed to the subordinate path priority mode, have passed through the second junction section 41, the control returns to step S 1 and the priority mode is changed from the subordinate path priority mode to the main path priority mode. If a prescribed number of guided vehicles 3 have not passed through the second junction section 41, the control proceeds to step S6.

In step S6, the control waits until five guided vehicles 3 have stopped on the exit-side connecting path 39 and a guided vehicle 3 traveling toward the linear section 45 has stopped at the stop position 79 located upstream in terms of the conveyance direction from the first branch section 47. If less than the prescribed number of guided vehicles 3 are waiting, the control returns to step S5. If the prescribed number of guided vehicles 3 are waiting, the control proceeds to step S1 and the mode is changed from the subordinate path priority mode to the main path priority mode.

With the control operations explained above, guided vehicles 3 from only one of the two paths upstream of the second junction section 41 are allowed to pass through the second junction section 41 at a time and the path from which passing is allowed is switched in an alternating fashion by switching the priority mode. As a result, the conveying efficiency of the guided vehicle system 1 as a whole is improved.
The priority mode switching is contrived such that no trouble is caused by the waiting guided vehicles 3. More specifically, priority mode switching is contrived such that guided vehicles 3 do not wait at positions farther upstream in terms of the conveyance direction than the first branch section 47 and the second branch section 49. As a result, waiting guided vehicles 3 do not obstruct the travel of other guided vehicles 3 that will be traveling on the other side of the first branch section 47 or the second branch section 49 (i.e., the side that does not lead to one of the junction sections addressed by the invention). Since the waiting time of the waiting guided vehicles 3 is also checked, a situation in which guided vehicles 3 end up waiting at the waiting positions for a long period of time can be avoided.

### (2) First Junction Section 35

A blocking control executed with respect to the first junction section 35 will be explained. In step S1 of Figure 3, a main path priority mode is adopted. In this case, the main path is the entrance-side connecting path 33, which connects in a linear fashion with the linear section 37 located downstream of the first junction section 35 in the conveyance direction. The subordinate path is the connecting path 31. In the main path priority mode, the guided vehicle controller 27 grants permission to blocking requests received from guided vehicles 3 traveling along the entrance-side connecting path 33 and does not grant permission to blocking requests received from guided vehicles 3 traveling along the connecting path 31. More specifically, a guided vehicle 3 traveling along the entrance-side connecting path 33 sends a blocking request to the guided vehicle controller 27 when it enters the prescribed area as it approaches the first junction section 35. The guided vehicle controller 27 then sends a blocking command to the guided vehicle 3 and permits the guided vehicle 3 to pass through the first junction section 35. After passing through the first junction section 35, the guided vehicle 3 sends a blocking cancellation request to the guided vehicle controller 27. As a result, the guided vehicle controller 27 cancels the blocking permission. Through repeated execution of the operations explained above, a plurality of guided vehicles 3 pass through the first junction section 35 consecutively.

Meanwhile, in the main path priority mode, when a guided vehicle 3 traveling along the connecting path 31 approaches the first junction section 35 and enters the prescribed area, the guided vehicle controller 27 does not send a blocking command to the guided vehicle 3 in response to a blocking request the guided vehicle 3 sends to the guided vehicle controller 27. Thus, the guided vehicle 3 stops at the stop position 71 in front of the first junction section 35.

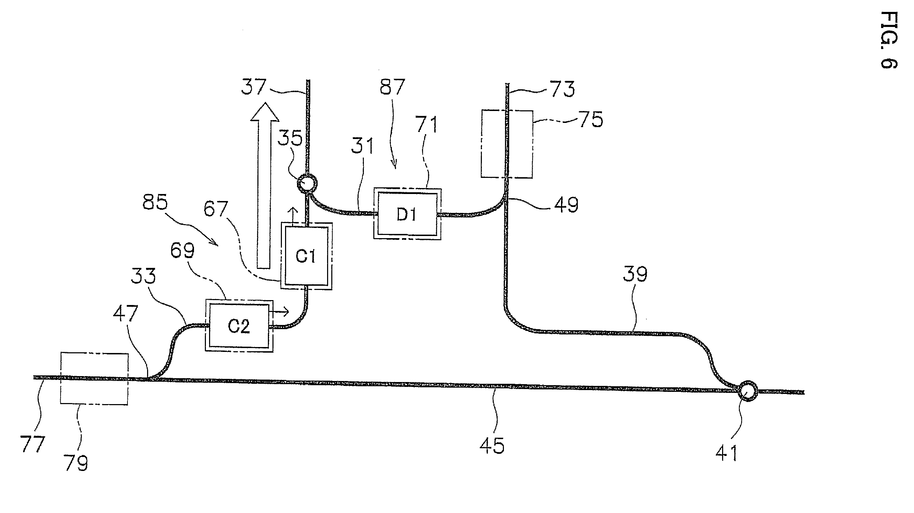

Figure 6 shows a situation in which two guided vehicles C1 and C2 traveling along the entrance-side connecting path 33 are about to pass through the first junction section 35 and one guided vehicle D1 is waiting on the connecting path 31 at the stop position 71.

In step S2, the control proceeds to step S3 if a prescribed amount of time has not elapsed. If the prescribed amount of time has elapsed, the control skips step S3 and proceeds to step S4. The prescribed amount of time is measured by a timer of the guided vehicle controller 27, which starts at the time when a waiting guided vehicle 3 (the guided vehicle D1 in Fig. 6) sends a blocking request.

In step S3, the controller waits until one guided vehicle 3 has stopped on the connecting path 31 and another guided vehicle 3 traveling toward the connecting path 31 has stopped at the stop position 75 located upstream in terms of the conveyance direction from the second branch section 49. If the number of waiting guided vehicles 3 has not reached the aforementioned prescribed number, the control returns to step S2. If the prescribed number of guided vehicles 3 are waiting, the control proceeds to step S4.

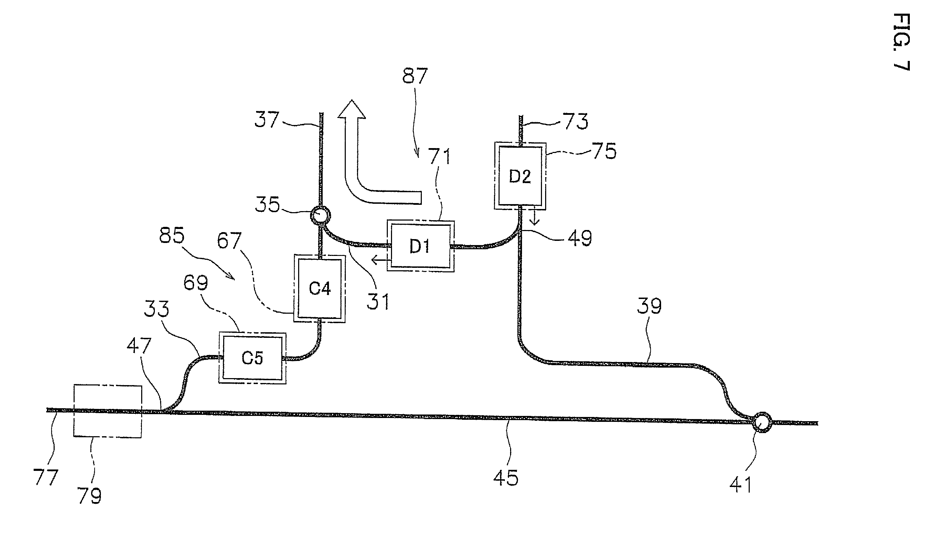

Figure 7 illustrates a situation in which a guided vehicle D1 has stopped at the stop position 71 along the connecting path 31 and a second guided vehicle D2 has stopped at the stop position 75 located upstream of the second branch section 49 in terms of the conveyance direction.

In step S4, the mode is switched from the main path priority mode to the subordinate path priority mode. In the subordinate path priority mode, the guided vehicle controller 27 grants permission to blocking requests received from guided vehicles 3 traveling along the connecting path 31 and does not grant permission to blocking requests received from guided vehicles 3 traveling along the entrance-side connecting path 33. Thus, when a guided vehicle 3 traveling along the entrance-side connecting path 33 approaches the first junction section 35 and enters the prescribed area, the guided vehicle controller 27 does not send a blocking command to the guided vehicle 3 in response to a blocking request the guided vehicle 3 sends to the guided vehicle controller 27. As a result, the guided vehicle 3 stops at the stop position 67. In this way, guided vehicles 3 stop sequentially along the entrance-side connecting path 33.
Fig. 7 shows a situation in which two guided vehicles C4 and C5 have stopped along the entrance-side connecting path 33. Meanwhile, the previously waiting guided vehicles D1 and D2 receive blocking permission from the guided vehicle controller 27 in sequential order and then send blocking cancellation requests to the guided vehicle controller 27 after they pass through the first junction section 35. As a result, the previously waiting guided vehicles D1 and D2 pass through the second junction section 41 successively.

In step S5, if a portion or all of the guided vehicles (guided vehicles D1 and D2), which had been waiting along the subordinate path when the priority mode changed to the subordinate path priority mode, have passed through the first junction section 35, the control returns to step S 1 and the priority mode is changed from the subordinate path priority mode to the main path priority mode. If a prescribed number of guided vehicles 3 have not passed through the first junction section 35, the control proceeds to step S6.

In step S6, the control waits until two guided vehicles 3 have stopped on the entrance-side connecting path 33 and a guided vehicle 3 traveling toward the entrance-side connecting path 33 has stopped at the stop position 79 located upstream in terms of the conveyance direction from the first branch section 47. If less than the prescribed number of guided vehicles 3 are waiting, the control returns to step S5. If the prescribed number of guided vehicles 3 are waiting, the control proceeds to step S1 and the mode is changed from the subordinate path priority mode to the main path priority mode.

With the control operations explained above, guided vehicles 3 from only one of the two paths upstream of the first junction section 35 are allowed to pass through the first junction section 35 at a time and the path from which passing is allowed is switched in an alternating fashion by switching the priority mode. As a result, the conveying efficiency of the guided vehicle system 1 as a whole is improved.
The priority mode switching is contrived such that no trouble is caused by the waiting guided vehicles 3. More specifically, priority mode switching is contrived such that guided vehicles 3 do not wait at positions farther upstream in terms of the conveyance direction than the first branch section 47 and the second branch section 49. As a result, waiting guided vehicles 3 do not obstruct the travel of other guided vehicles 3 that will be traveling on the other sides of the first branch section 47 or the second branch section 49 (i.e., the sides that do not lead to one of the junction sections addressed by the invention). Since the waiting time of the waiting guided vehicles 3 is also checked, a situation in which guided vehicles 3 end up waiting at the waiting positions for a long period of time can be avoided.

### 5. Distinctive Features

Distinctive features of this embodiment of the present invention will now be explained using the exclusion control executed with respect to the second junction section 41 as an example.

(1) The guided vehicle system 1 comprises a traveling path, a plurality of guided vehicles 3, and a guided vehicle controller 27. The traveling path includes a linear section 45, an exit-side connecting path 39, and a second junction section 41 where the linear section 45 and the exit-side connecting path 39 converge. The guided vehicles 3 travel along the traveling path. The exit-side connecting path 39 has a standby section 81. The guided vehicle controller 27 controls the movement of the guided vehicles 3. The guided vehicle controller 27 allows guided vehicles 3 from the linear section 45 to pass through the second junction section 41 continuously while making guided vehicles 3 from the exit-side connecting path 39 wait at the standby section 81 until a prescribed number of guided vehicles have stopped in the standby section 81 of the exit-side connecting path 39 (including a portion upstream of the second branch section 49 in terms of the conveyance direction).
With this system, guided vehicles 3 pass through the second junction section 41 continuously from the linear section 45. The continuous passing of the guided vehicles 3 from the linear section 45 is stopped when a prescribed number of guided vehicles 3 are waiting at the standby section 81 of the exit-side connecting path 39. Since the guided vehicles 3 pass through the second junction section 41 continuously, the conveying efficiency of the guided vehicle system 1 as a whole is improved. Since guided vehicles 3 from the exit-side connecting path 39 are allowed to pass through the second junction section 41 when the number of guided vehicles 3 waiting at the standby section 81 of the exit-side connecting path 39 reaches a prescribed number, the guided vehicles 3 can be prevented from becoming stagnated at an upstream side (in terms of the conveyance direction) of the exit-side connecting path 39.

(2) After a prescribed number of guided vehicles 3 have stopped in the standby section 81 of the exit-side connecting path 39, the guided vehicle controller 27 allows a plurality of guided vehicles 3 waiting at the standby section 81 of the exit-side connecting path 39 to pass through the second junction section 41 in a continuous fashion. Since the plurality of guided vehicles 3 waiting at the standby section 81 of the exit-side connecting path 39 pass through the second junction section 41 in a continuous fashion, the conveying efficiency of the guided vehicle system 1 as a whole increases.

(3) The linear section 45 has a standby section 83. While guided vehicles 3 pass from the exit-side connecting path 39 through the first junction section 35, the guided vehicle controller 27 makes guided vehicles stopped in the standby section 83 of the linear section 45 wait until a prescribed number of guided vehicles have stopped in the standby section 83 of the linear section 45. Thus, since guided vehicles 3 can pass through the second junction section 41 from the linear section 45 when the number of guided vehicles 3 waiting at the standby section 83 of the linear section 45 reaches the prescribed number, the guided vehicles 3 can be prevented from becoming stagnated at an upstream side (in terms of the conveyance direction) of the linear section 45.

(4) The guided vehicle controller 27 allows the waiting guided vehicles 3 to pass through the second junction section 41 regardless of the number of waiting guided vehicles if the guided vehicles 3 have been waiting along the exit-side connecting path 39 for at least a prescribed amount of time. Thus, even if the number of guided vehicles 3 waiting on the exit-side connecting path 39 has not reached the prescribed number, the waiting guided vehicles 3 are allowed to pass through the second junction section 41 when the prescribed amount of time has elapsed regardless of the number of the guided vehicle waiting. As a result, the guided vehicles 3 do not wait for a long period of time on the exit-side connecting path 39.

(5) The guided vehicle system 1 comprises a traveling path, a plurality of guided vehicles 3, and a guided vehicle controller 27. The traveling path includes a linear section 45, an exit-side connecting path 39, and a second junction section 41 where the linear section 45 and the exit-side connecting path 39 converge. The guided vehicles 3 travel along the traveling path. The guided vehicle controller 27 can switch between a main path priority mode (first mode) in which it only allows guided vehicles 3 from the linear section 45 to travel through the second junction section 41 and a subordinate path priority mode (second mode) in which it only allows guided vehicles 3 from the exit-side connecting path 9 to travel through the second junction section 41. In at least one of the modes, the guided vehicle controller 27 switches modes when the number of guided vehicles 3 stopped on the path from which traveling to the second junction section 41 is not allowed reaches a prescribed number.
In this guided vehicle system 1, guided vehicles 3 from the linear section 45 pass continuously through the second junction section 41 while the controller is in the main path priority mode and guided vehicles 3 from the exit-side connecting path 39 pass continuously through the second junction section 41 while the controller is in the subordinate path priority mode. In at least one of the modes, the controller switches modes when the number of guided vehicles 3 stopped on the path from which traveling to the second junction section 41 is not allowed reaches a prescribed number.
Since the guided vehicles 3 pass through the second junction section 41 continuously, the conveying efficiency of the system as a whole is improved. Also, since the mode switches when the number of guided vehicles 3 stopped on the path from which traveling through the second junction section 41 is not permitted reaches a prescribed number, the guided vehicles 3 do not easily become stagnated along the path from which traveling through the second junction section 41 is not permitted.

(6) The guided vehicle controller 27 is contrived to switch modes when a number of guided vehicles 3 that have passed through the second junction section 41 from the path from which traveling to the second junction section 41 is permitted reaches a prescribed value, even if the number of guided vehicles 3 stopped on the path from which traveling to the second junction section 41 is not permitted has not reached a prescribed value.
With such a guided vehicle system, guided vehicles 3 do not easily become stagnated on the path from which traveling to the second junction section 41 is not permitted.

(7) The guided vehicle controller 27 is contrived to switch modes when a prescribed amount of time has elapsed since the selection of the current mode, even if the number of guided vehicles 3 stopped on the path from which traveling to the second junction section 41 is not permitted has not reached a prescribed number.
With such a guided vehicle system 1, guided vehicles 3 do not easily become stagnated on the path from which traveling to the second junction section 41 is not permitted.

(8) The guided vehicle controller 27 is contrived to give priority to selecting a mode in which guided vehicles 3 can only travel along whichever one of the linear section 45 and the exit-side connecting path 39 that is linear on both the upstream and the downstream of the second junction section 41.
With such a guided vehicle system 1, the conveying efficiency of the system as a whole is improved because the path that is linear through the second junction section 41 is given priority.

(9) At least one of the linear section 45 and the exit-side connecting path 39 has a standby section (83 and 81) where a guided vehicle 3 can wait.
With such a guided vehicle system 1, guided vehicles 3 can wait at the standby section (83 and 81) on the path from which traveling to the second junction section 41 is not permitted.

(10) A plurality of guided vehicles 3 can wait at the standby sections (83 and 81).
With such a guided vehicle system 1, guided vehicles 3 can travel for a longer period of time along the path from which traveling to the second junction section 41 is permitted because a plurality of guided vehicles 3 can wait at the standby sections (83 and 81). As a result, the conveying efficiency of the system as a whole is improved.

(11) The linear section 45 spans from the second junction section 41 to an immediate branch section (47) located upstream in terms of the conveyance direction, and the exit-side connecting path 39 spans from the second junction section 41 to an immediate branch section (49) located upstream in terms of the conveyance direction. The prescribed number of guided vehicles 3 stopped along the path from which traveling to the second junction section 41 is not permitted is a maximum number of guided vehicles that can be stopped along the path from which traveling to the second junction section 41 is not permitted without impeding other guided vehicles 3 traveling along a different path at the aforementioned immediate branch section (47 or 49).
With such a guided vehicle system 1, guided vehicles 3 stopped along the path from which traveling to the second junction section 41 is not permitted will not impede the movement of other guided vehicles 3 traveling along a different path at the immediate branch section (47 or 49). As a result, the conveying efficiency of the system as a whole is improved.

(12) By configuring the entrance-side connecting path 33 or the exit-side connecting path 39 to be curved, the lengths thereof can be increased and a plurality of stopping positions can be secured. The provision of more waiting locations for the guided vehicles 3 allows more guided vehicles 3 to wait while priority is given to guided vehicles 3 traveling on the other path.
In particular, the exit-side connecting path 39 serves as a place through which guided vehicles 3 that have completed processing in the circuitous traveling path 5 move to another circuitous travel path. Hence, guided vehicles 3 may easily become stagnated in the exit-side connecting path 39. Consequently, making the exit-side connecting path 39 long, such that a plurality of guided vehicles 3 can stop along the exit-side connecting path 39, contributes to improving the conveying efficiency.

(13) The prescribed number of guided vehicles that can wait at each of the standby sections is set to two or more, and the priority mode is switched such that the waiting guided vehicles are allowed to pass through the junction section when the number of waiting guided vehicles 3 reaches the set number. Thus, a degree of priority for the other path at a junction section can be set freely based on the set number.

### 6. Other Embodiments

An embodiment of the present invention has been explained heretofore, but the invention is not limited to the embodiment. Various changes can be made without departing from the scope of the invention.

(1) In the previously explained embodiment, the priority mode is switched from the subordinate path priority mode to the main path priority mode when a portion or all of the guided vehicles, which had been previously waiting on the subordinate path when the priority mode was switched to the subordinate path priority mode, have passed through the junction section (step S5). However, the present invention is not limited to such an arrangement.
For example, it is acceptable to configure the system such that the priority mode switches to the main path priority mode when a prescribed amount of time has elapsed since the mode was switched to the subordinate path priority mode. The prescribed amount of time is measured by a timer of the guided vehicle controller 27, which starts at the time when a first waiting guided vehicle 3 sends a blocking request.

(2) In the previously explained embodiment, the priority mode is switched from the main path priority mode to the secondary path priority mode when a prescribed amount of time has passed since the controller began measuring the waiting time of a first guided vehicle in step S2 of Figure 3. However, the present invention is not limited to such an arrangement. For example, it is acceptable to control the priority mode in a manner that ignores the waiting time entirely or to control both switching from the main path priority mode to the subordinate path priority mode and switching from the subordinate path priority mode to the main path priority mode in a manner based on the waiting time.

(3) In the previously explained embodiment, steps S3 and S6 of Figure 3 are contrived such that the priority mode is switched when the number of guided vehicles 3 waiting at a standby section reaches a point where a guided vehicle 3 has stopped at a stop position 75 or 79 located upstream (in terms of the conveyance direction) of the first branch section 47 or the second branch section 49. However, the present invention is not limited to such an arrangement.
For example, it is acceptable to contrive the system to switch the priority mode when the number of guided vehicles 3 waiting at the standby section reaches a point where a guided vehicle 3 has stopped at a stop position located downstream (in terms of the conveyance direction) of the first branch section 47 or the second branch section 49.

(4) In the previously explained embodiment, both of the paths that converge at a junction section are provided with a guided vehicle standby section. However, the present invention is not limited to such a configuration. For example, it is acceptable if only one of the paths has a standby section.

(5) In the previously explained embodiment, the main path is set as the path from which a guided vehicle travels straight through a junction section. However, the present invention is not limited to such a configuration. For example, it is acceptable if the main path is the path having a curved section.

(6) The layout and control scheme of the guided vehicle system are not limited to those described in the embodiment. The type of equipment with which the guided vehicle system is used is also not limited to the previously explained embodiment.

### INDUSTRIAL APPLICABILITY

The present invention is applicable to a guided vehicle system in which a plurality of guided vehicles travel on a path having a junction section where two paths merge.

### REFERENCE SIGNS LIST

- 1: guided vehicle system
- 3: guided vehicle
- 5: circuitous traveling path
- 7: principal traveling path
- 9: processing device
- 11: stocker
- 13: receiving port
- 15: discharge port
- 19: control scheme
- 21: manufacturing controller
- 23: physical distribution controller
- 25: stocker controller
- 27: guided vehicle controller (controller)
- 31: connecting path
- 33: entrance-side connecting path
- 35: first junction section
- 37: linear section
- 39: exit-side connecting path (second path)
- 41: second junction section
- 43: linear section
- 45: linear section (first path)
- 47: first branch section
- 49: second branch section
- 51, 53, 55, 57, 59, 59, 61, 63,:
- 65, 67, 69, 71, 75, 79: stop position
- 73, 77: linear section
- 81,83,85,87: standby section

## Claims

1. A guided vehicle system, comprising:
a traveling path having a first path, a second path having a standby section, and a junction section where the first path and the second path merge;
a plurality of guided vehicles configured to travel along the traveling path; and
a controller configured to control the travel of the guided vehicles, wherein
during a period of time before a prescribed number of the guided vehicles have stopped in the standby section of the second path, the controller allows the guided vehicles on the first path to pass to the junction section continuously while making the guided vehicles wait at the standby section of the second path.

2. The guided vehicle system according to claim 1, wherein
the controller allows a plurality of guided vehicles from the standby section of the second path to pass through the junction section continuously when the prescribed number of the guided vehicles have stopped in the second path.

3. The guided vehicle system according to claim 2, wherein
the first path has a standby section;
while the guided vehicles are passing through the junction section from the second path, the controller makes the guided vehicles wait at the standby section of the first path until a prescribed condition is satisfied.

4. The guided vehicle system according to any one of claims 1 to 3, wherein
when the guided vehicles has been waiting at the standby section of the second path for at least a prescribed amount of time, the controller allows the waiting guided vehicle to pass through the junction section regardless of the number of the guided vehicle waiting.

5. A guided vehicle system, comprising:
a traveling path comprising a first path, a second path, and a junction section where the first path and the second path merge;
a plurality of guided vehicles contrived to travel along the traveling path;
a controller contrived to control the travel of the guided vehicles, wherein
the controller can switch between a first mode, in which the controller only allows guided vehicles from the first path to travel through the junction section, and a second mode, in which the controller only allows guided vehicles from the second path to travel through the junction section, and
in at least one of the modes, the controller switches modes when the number of guided vehicles stopped on the path, from which traveling to the junction section is not permitted, reaches a prescribed number.

6. The guided vehicle system according to claim 5, wherein
the controller switches modes when the number of guided vehicles that have passed through the junction section from the path, from which traveling to the junction section is permitted, reaches a predetermined number, even if the number of guided vehicles stopped on the path, from which traveling to the junction section is not permitted, has not reached the prescribed number.

7. The guided vehicle system according to claim 5, wherein
the controller switches modes when a prescribed amount of time has elapsed since a current mode was selected, even if the number of guided vehicles stopped on the path, from which traveling to the junction is not permitted, has not reached the prescribed number.

8. The guided vehicle system according to any one of claims 5 to 7, wherein
the controller gives priority to selecting a mode in which the guided vehicles can only travel along whichever one of the first path and the second path that is linear on both the upstream and the downstream of the junction section.

9. The guided vehicle system according to any one of claims 5 to 8, wherein
at least one of the first path and the second path has a standby section where the guided vehicles can wait.

10. The guided vehicle system according to claim 9, wherein a plurality of the guided vehicles can wait at the standby section.

11. The guided vehicle system according to claim 9 or 10, wherein
in a section of each of the first path and the second path spanning from the junction section to an immediate branch section located upstream in the conveyance direction, the prescribed number of guided vehicles stopped along the path, from which traveling to the junction section is not permitted, is a maximum number of guided vehicles that can be stopped on the path, from which traveling to the junction section is not permitted, without impeding other guided vehicles traveling along a different path at the immediate branch section.
